# EUROPEAN PATENT APPLICATION

(11) **EP 1 637 791 A2**
(43) Date of publication of application: **22.03.2006**
(21) Application number: 05108571.0
(22) Date of filing: 16.09.2005
(51) Int. Cl.: F16L 37/12

(54) **Fluid quick connector with slidable retainer**

(30) Priority: 21.09.2004 US 946399
(71) Applicant: ITT Manufacturing Enterprises, Inc., Wilmington, Delaware 19801 (US)
(72) Inventor: Krause, Randy Walter, Dryden, MI Michigan 48428 (US); Walker, Daniel Howard, Sylvan Lake MI Michigan 48320 (US)
(74) Representative: Esser, Wolfgang

(57) **Abstract**

A fluid quick connector couples an endform (62) having a raised flange (64) in a bore of a fluid operative element. In one aspect, a retainer (70) in the form of a plate has opposed edges forming channels movably mounting the plate on a housing. Side tabs (110) releasably lock the retainer in a moved position to latch the endform in the housing. In another aspect, the retainer includes spring arms (170, 172) which bias the retainer to the second position. The retainer is held in the first position by a lip of a top hat extending outward from the housing. The top hat moves longitudinally inward upon engagement with an endform to free the spring arms to automatically move the retainer to the second position latching the endform in the housing.

## Description

### BACKGROUND

The present invention relates, in general, to fluid quick connectors which couple fluid connector components.

Snap-fit or quick connectors are employed in a wide range of applications, particularly, for joining fluid carrying conduits in automotive and industrial application. Such quick connectors utilize retainers or locking elements for securing one connector component, such as a tubular conduit, within a complimentary bore of another connector component or housing. Such retainers can be of the axially-displaceable or radially-displaceable type. The terms "axially-displaceable" or "radially-displaceable" are taken relative to the axial bore through the component which receives the retainer.

In a typical quick connector with an axially displaceable retainer, the retainer is mounted within a bore in a housing of one connector component or housing. The retainer has a plurality of radially and angularly extending legs which extend inwardly toward the axial center line of the bore in the housing. A tube or conduit to be sealingly mounted in the bore in the housing includes an endform with a radially upset portion or flange which abuts an inner peripheral surface of the retainer legs. Seal and spacer members as well as a bearing or top hat are typically mounted in the bore ahead of the retainer to form a seal between the housing and the tube when the tube is lockingly engaged with the retainer legs in the housing.

Radially displaceable retainers are also known in which the retainer is radially displaceable through aligned bores or apertures formed transversely to the main throughbore in the housing. The radially displaceable retainer is typically provided with a pair of depending legs which are sized and positioned to slip behind the radially upset portion or flange on the tube only when the tube or conduit is fully seated in the bore in the housing. This ensures a positive locking engagement of the tube with the housing as well as providing an indication that the tube is fully seated since the radially displaceable retainer can be fully inserted into the housing only when the tube has been fully inserted into the bore in the housing.

Regardless of the type of retainer, the housing portion of a fluid connector typically includes an elongated stem having one or more annular barbs spaced from an end. The barbs provide secure engagement with another tube or conduit which is forced over the barbs to connect the housing with one end of the conduit.

Most fluid quick connectors include multiple components which require separate manufacturing processes and assembly. Further, the typical quick connector has an overall length to accommodate the retainer. This increases the overall length of the fluid quick connector beyond that which is desirable in many applications. In addition, the increased length of the fluid quick connector adds to material costs.

In certain applications, such as automobile fuel systems, it is important for verification of fuel system integrity in case of a fire that the quick connector be made of metal.

Thus, the present invention aims to provide an improved fluid quick connector.

### SUMMARY

The present invention is a fluid quick connector with a slidable retainer. In one aspect, the fluid quick connector includes a housing having a bore extending from a first end. A retainer is mounted on the housing for movement between first and second positions relative to the housing. The retainer includes an aperture with a first larger diameter portion and a contiguous second smaller diameter portion. The first diameter aperture portion, when the retainer is in the first position, is coaxially aligned with the bore in the housing to allow insertion of the flange on the endform into the bore in the housing. The second diameter aperture portion is coaxially aligned with the bore in the housing and blocks separation of the flange on the endform from the housing when the retainer is in the second position.

In one aspect, the retainer includes biasing means for automatically moving the retainer from the first position to the second position. A sleeve, when can be in the form of a top hat, is movably mounted in the bore in the housing and moves between a first position in which a portion of the sleeve engages the first aperture in the retainer to hold the retainer in the first position, and a second position during insertion engagement with an endform, to release the retainer for automatic movement to the second position. Biasing means are carried on the retainer and engage the housing for normally biasing the retainer to the second position.

Alternately, a redundant latch is mounted through the aperture in the housing and around one side edge of the housing.

### BRIEF DESCRIPTION OF THE DRAWING

The various features, advantages and other uses of the present invention will become more apparent by referring to the following detailed description and drawing in which:
- Fig. 1: is an exploded, perspective view of one aspect of a fluid quick connector according to the present invention;
- Fig. 2: is an end view of the fluid quick connector shown in Fig. 1, disposed in an assembled, open position;
- Fig. 3: is an end view of the fluid quick connector shown in Fig. 1, disposed in an assembled, closed position;
- Fig. 4: is a cross sectional plan view of the assembled quick connector depicted in Fig. 3;
- Fig. 5: is a perspective view of another aspect of a fluid quick connector according to the present invention shown in an open position;
- Fig. 6: is a longitudinal cross sectional view of the fluid quick connector shown in Fig. 5;
- Fig. 7: is a front perspective view of the retainer shown in Figs. 5 and 6;
- Fig. 8: is rear perspective view of the retainer shown in Figs. 5 and 6;
- Fig. 9: is a perspective view of the quick connector of Fig. 5, disposed in assembled, closed position latching an end form in the quick connector; and
- Fig. 10: is a longitudinal cross sectional view of the assembled quick connector of Fig. 9 depicted in a closed, latched position.

### DETAILED DESCRIPTION

Before describing the various aspects of the fluid quick connector of the present invention, a brief explanation of the general use of fluid quick connectors will be provided for clarity in understanding the features and advantages of the present invention.

The following description of the use of the fluid quick connector of the present invention to connect tubular members will be understood to apply to the connection of conduits, hoses, and or metal or plastic tubes to each other in fluid flow communication. The end of a conduit, tubular member or fluid use component inserted into the interior of one end of the quick connector is defined herein as an endform. The endform can be a separate member which receives a separate hose or conduit at one end, or a shape integrally formed on the end of an elongated metal or plastic tube. Further, the endform can be integrally formed on or mounted as a separate element on a fluid use device, such as a pump, filter, valve, manifold, etc., rather than as part of an elongated conduit.

All of the aspects of the present fluid quick employ a housing and a retainer which are used to fluidically couple fluid operative elements, such as, pumps, valves, manifolds, etc., as well as individual tubes, hoses, etc.

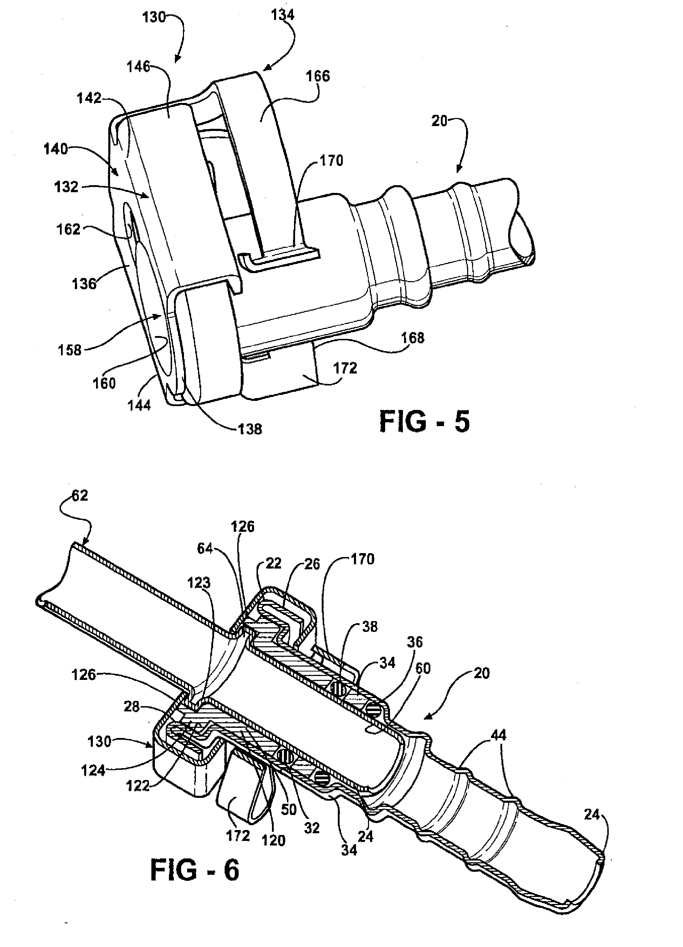

Referring briefly to Figs. 5 and 6, the illustrated fluid quick connector includes a housing 20, typically formed of metal or plastic, with metal being used by way of example only in the present invention. The housing has a stepped exterior shape extending from an enlarged diameter first end 22 to an opposed second end 24. The enlarged first diameter end 22 is formed of a radially outer flange 26 extending from the end 22 and spaced from an inner flange 28. A step 30 creates a transition between the inner flange 28 and a reduced diameter portion 32 extending axially with respect to the longitudinal axis of the housing 20. A second step 34 is formed in the housing 20 spaced from the first step 30 and forms a seat for one or more seal elements, such as O-rings 36 and 38, which are separated by a rigid annular spacer 40. Another reduced diameter bore portion 42 extends axially from the transition or shoulder 34 to the second end 24 of the housing 20. Conduit retention barbs 44 may be formed along the housing spaced from the second end 24 for retaining a flexible hose or tube on one end of the housing 20.

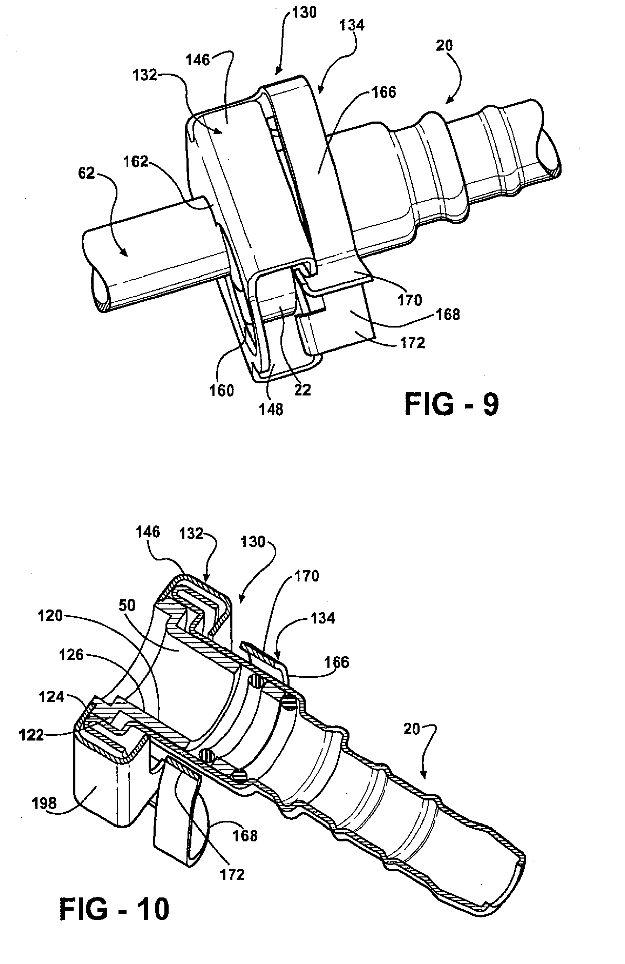

As shown in Figs. 6 and 10, a rigid top hat 50 is mounted in the bore of the housing 20. The top hat 50 can be formed of a rigid plastic material and serves to hold the seal members 36 and 38 and the spacer 40.b the bore in the housing 20.

The inner diameter of bores through the top hat 50, the seals 36 and 38, the spacer 40 and the bore portion 42 are sized to sealingly receive a tip end 60 of an endform 62. The endform 62 has an enlarged diameter bead or flange 64 spaced from a tip end 66.

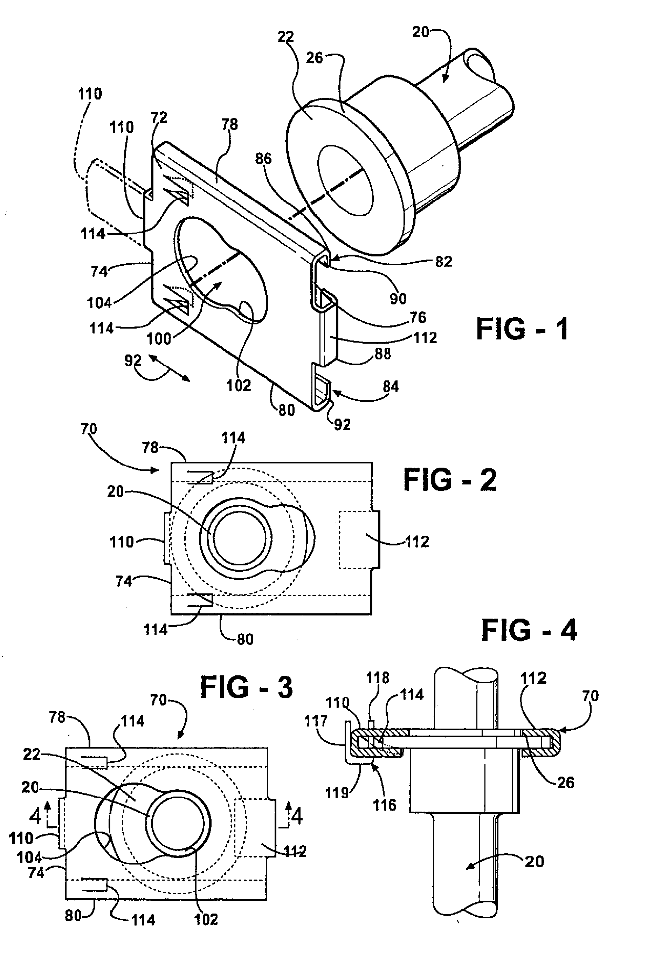

Referring now to one aspect of the invention shown in Figs. 1-4, the fluid quick connector of this aspect includes a retainer 70 slidingly mounted over the enlarged end flange 26 at the first end 22 of the housing 20. The retainer 70 is formed of a suitable high strength material, with a metallic material, such as stainless steel, being used by example only. The retainer 70 is in the form of a generally planar plate 72 having shorter length side edges 74 and longer length side edges 78 and 80. It will be understood that the plate portion 72 may have other shapes, such as square, oval, circular, etc. The longer side edges 78 and 80 are formed by a pair of opposed, inward turned, opposing flanges 82 and 84. The flanges 82 and 84 have opposed facing inner edges 86 and 88, respectively. The edges 86 and 88 are spaced from the adjacent portions of the plate 72 to define recesses 90 and 92. The recesses 90 and 92 have a width slightly larger than the axial length of the end flange 26 of the housing 20 to enable the retainer 70 to be slidably mounted over the end flange 26 of the housing 20 for sliding movement in both directions shown by arrow 94.

The plate or wall 70 includes an aperture 100 generally having a keyhole shape formed of a first smaller diameter aperture portion 102 and an adjacent, contiguous, larger diameter aperture portion 104.

The retainer 70 is mounted over the end flange 26 of the housing 20 for sliding movement between a first position shown in Fig. 2, which is defined as an open position in that the larger diameter aperture portion 104 of the retainer 70 is aligned with the open end of the bore extending from the first end 22 of the housing 20 to a second position shown in Figs. 3 and 4. This larger diameter 104 aperture portion allows the enlarged flange 64 on the endform 62 to be inserted through the first portion aperture 104 in the retainer 70 and into the bore in the housing 20.

After the flange 64 has been fully inserted into the housing such that the tip end 66 of the endform 62 is fully engaged with the seals 34 and 36 in the bore in the housing 20, the retainer 70 can be moved to the second position shown in Fig. 3 which is defined as the latched or closed position. In this second position, the smaller diameter aperture 102 in the wall 72 of the retainer 70 is disposed adjacent to the flange 64 on the endform 62 and blocks separation of the endform 62 from the housing 20. When in the second latched position, an end tab 110 projecting from the side edge 74 is bent around the end flange 26 of the housing 20 to lock the retainer 70 in the second position on the end flange 26 of the housing 20. At the same time, the pre-bent tab 112 on the side edge 76 fits around the flange 26 on the endform 62.

The end tabs 110 and 112 may be disengaged from the end flange 26 from the housing 20 to permit sliding movement of the retainer 70 hack to the first position to allow separation of the endform 62 from the housing 20.

A pair of lock tabs 114 and 116 may be integrally punched out of one surface of the wall 72 or formed as separate members fixedly joined to the wall 72. The lock tabs 114 and 116 engage the peripheral edge of the end flange 26 of the housing 20 to releasably hold the retainer 70 in the second position.

As also shown in Fig. 4, an optional redundant clip or latch 116 is employed to retain the housing 20 in the second latched position. The redundant latch 116 is in the form of a U-shaped clip having a pair of spaced legs 117 and 118 interconnected on one end by a central leg 119. The side legs 117 and 118 may have a slight inward taper to provide a degree of resiliency to engage the housing 20 with a spring force. As shown in Fig. 4, one leg 118 of the redundant latch 116 is inserted through the opening between one end of the large diameter aperture 104 and the edge of the flange 26 on the end form 20. The other leg 117 slides over the side edge 74 of the wall 72 and over the bent end portion of the tab 110.

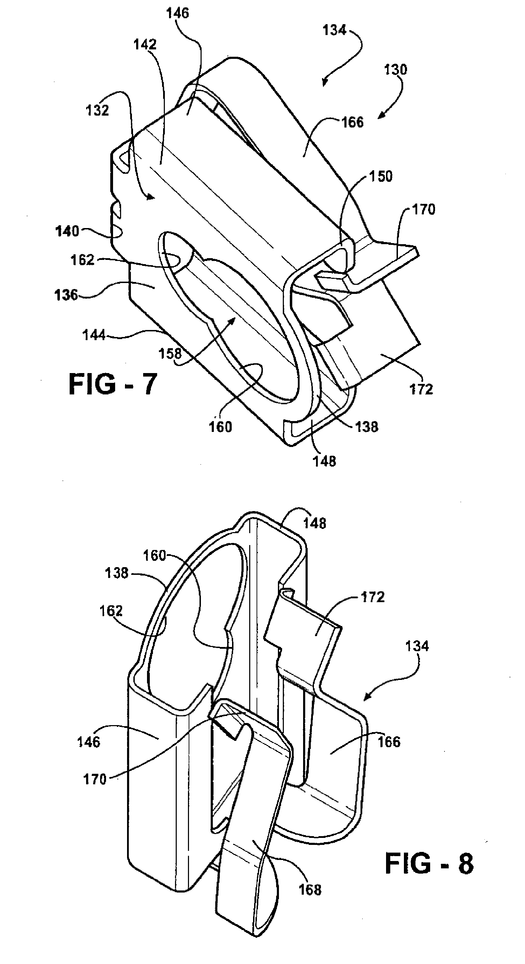

Referring now to Figs. 5-10 there is depicted another aspect of the fluid quick connector 130 of the present invention. In this aspect, the same housing 20 is employed. However, the top hat 50, shown in Figs. 6 and 10, has a sleeve portion 120 extending from one end. A shoulder 122 acts as a transition between the smaller diameter sleeve 120 and an enlarged diameter flange 124. The transition 122 defines a shoulder or recess 123 in conjunction with an axially extending, annular lip 126 projecting from the flange 124 and disposed at a radius between the outer radius of the flange 124 and the inner radius of the sleeve 120. The recess 123 which extends between the transition 120 and the outer end of the lip 126 is sized to receive the entire flange 64 on the endform 62 when the endform 62 is fully inserted into the bore on the housing 20.

The top hat 50 is captured in the bore in the housing 20 by a retainer means denoted generally by reference number 130. The retainer means 130 is formed of a one-piece member, generally of a high strength material, such as a metal and, by example only, stainless steel. The entire retainer 130 may be formed as a one-piece stamping.

The retainer 130 includes a housing portion 132 and a biasing portion 134. The housing portion 132 is formed of a wall 136 with a first end 138, an opposed second end 140, and spaced side edges 142 and 144. The side edges 142 and 144 transition into spaced side walls 146 and 148, respectively, each of which terminates in an inward extending flange 150 and 152, respectively.

The wall 136 and the in-turned flanges 150 and 152 on the side walls 146 and 148 form channels which movably receive the enlarged end flange 26 of the housing 20 to mount the housing portion 132 of the retainer 130 over the enlarged end 26 of the housing 20.

An aperture 158 is formed in the wall 136. The aperture 158 has a first, larger diameter aperture 160 and a contiguous second smaller diameter aperture 162. The contiguous apertures 160 and 162 form the aperture 158 with a key-hole shape.

The larger diameter first aperture 160 is sized to be slightly larger than the outer diameter of the flange 64 on the endform 62. The inner diameter of the second diameter 162 is slightly smaller than the outer diameter of the flange 64 and the endform 62 to engage the flange 64 and block or retain the endform 62 in the housing 20 when the retainer 130 is mounted over the enlarged end 26 of the housing 20.

The second end 140 of the wall 136 transitions to a flange 164. One end of the flange 164 is connected to the second end 140 of the wall 136. The opposite end of the flange 164 transitions into the biasing 134 which, by way of example only, is formed of a pair of spring arms 166 and 168 which extend at an angle, typically perpendicular by way of example only, from the flange 164. The spring arms 166 ad 168 have a lower portion adjacent the flange 164 which is the same or slightly larger than the outer diameter of the main portion of the housing 20. The spring arms 166 and 168 are bent inward from the end adjacent the flange 164 and curve or bend slightly outward to form tips 170 and 172. The normal or nominal spacing between the tips 170 and 172 is less than the outer diameter of the main portion of the housing 20.

The biasing means 134 formed of the spring arms 166 and 168 provides a biasing force which automatically moves the retainer 130 from the first position shown in Fig. 10 to the second position shown in Fig. 9 in which the second smaller diameter aperture 162 is aligned with the flange 64 and the endform 62 blocking at longitudinal axial separation of the endform 62 from the housing 20.

In assembling the quick connector of this aspect of the present invention, the retainer 130 is mounted on the housing 20 in the first position shown in Fig. 5 . In this position, the first larger diameter 160 is aligned with the bore in the housing 20 for receiving the enlarged diameter flange 64 on the endform 62. The top hat 50 has been moved axially toward the first end 22 of the housing 20 such that the lip 126 extends through the inner surface of the aperture 160 to hold the retainer 130 in the first pre-latched position.

In this first position, the spring arms 166 and 168 position the tips 170 and 172 on the housing 20 under a preload biasing force whereby the tips 170 and 172 are just over the largest diameter portion of the housing 20.

Upon insertion of the tip end 60 of the endform 62 through the aperture 160 in the retainer 130 and into the bore in the housing 20, as shown in Fig. 6, the flange 64 on the endform 62 engages the recess on the end of the top hat 50 and axially moves the top hat 150 in the direction of continued insertion of the endform60 into the bore in the housing until the tip end 60 of the endform 62 is fully inserted in sealed contact with the seal members 34,36, and 38 in the housing 20 and the transition portion or shoulder 122 of the top hat 50 is seated against an inner surface of the end of the housing 20. At this time, the end lip 126 on the top hat 120 has disengaged from the inner surface of the aperture 60 in the retainer 30. The biasing force provided by the bent over spring arms 166 and 168 immediately urges the entire retainer 130 from the first position shown in Fig. 5 to the second position shown in Figs. 6 and 9. This movement to the second position brings the second, smaller diameter aperture 162 in alignment with the bore in the housing 20. The smaller diameter second aperture 162 engages the flange 64 on the endform 62, as shown in Fig. 6, to latch the endform 62 in the housing 20.

Manual movement of the retainer 130 back to the first position shown in Fig. 5 will align the larger diameter first aperture 160 with the flange 64 and the endform 62 and allow separation of the endform 62 from the housing 20. The outward movement of the tip end 60 of the endform 62 from the housing 20 will cause axial movement of the top hat 50 by frictional contact until the lip 126 on the top hat 50 extends through the aperture 160 to fix the retainer 130 in the pre-latched, first position.

## Claims

1. A fluid quick connector for fluidically coupling an endform (62) having a raised flange (64) to a fluid operative element comprising:
a housing (20) having a bore extending from a first end;
a retainer (70) mounted on the housing for movement between first and second positions relative to the housing, the retainer including an aperture (100) with a first larger diameter aperture portion (104) and a contiguous second smaller diameter aperture portion (102), the first diameter aperture portion (104), the retainer (70), when in the first position, coaxial aligned with the bore in the housing (20) for allowing insertion of the flange (64) on the endform (62) into the bore in the housing; and when the retainer (70) is in the second position, the second diameter aperture portion (102) coaxially aligned with the bore in the first end of the housing and blocking the flange (64) to latch the endform in the housing.

2. The fluid quick connector of claim 1 wherein the retainer (70) comprises:
a wall (72) carrying the aperture.

3. The fluid quick connector of claim 1 or 2 wherein the retainer (70) comprises:
at least one lip (110, 130) disposed over the housing.

4. The fluid quick connector of at least one of claims 1 to 3 wherein the retainer comprises:
at least one side edge tab (110) bendable over the housing.

5. The fluid quick connector of at least one of claims 1 to 4 further comprising:
lock tabs (114, 116) carried on the retainer (70) for engaging the housing when the retainer is in the second position.

6. The fluid quick connector of claim 1 wherein the retainer (130) comprises:
a wall (136) having the aperture (158) formed of the first diameter aperture (160) portion and the second diameter aperture portion (162).

7. The fluid quick connector of claim 6 wherein the retainer (130) further comprises:
a pair of channels (150, 152, 146, 148) extending from the wall (136) for movably mounting the retainer (130) on the housing.

8. The fluid quick connector of claim 6 or 7 further comprising:
biasing means (170, 172, 166, 168), carried by the retainer, for automatically biasing the retainer to the second position.

9. The fluid quick connector of claim 8 wherein the biasing means comprises:
at least one spring arm (170, 172, 166, 168), carried on the retainer and biased on the housing.

10. The fluid quick connector of claim 8 wherein the biasing means comprises:
a pair of spring arms (170, 172, 166, 168), carried on the retainer biasingly engaging the housing.

11. The fluid quick connector of claim 1 further comprising:
an enlarged flange (26) formed at the first end of the housing (20), the retainer (70, 130) movably mounted on the flange.

12. The fluid quick connector of claim 1 further comprising:
a latch member mountable through the first larger diameter aperture portion of the aperture in the retainer to prevent movement of the retainer from the second position to the first position.

13. A method of fluidically coupling an endform (62) having a raised flange (64) to a fluid operative element by a fluid quick connector comprising:
providing a housing (20) having a bore extending from a first end;
mounting a retainer (70, 130) on the housing, the retainer having an aperture (100, 158) with a first larger diameter aperture portion (104, 160) and a contiguous second smaller diameter aperture portion (102, 162);
biasing the retainer for movement from the first position wherein the first larger diameter aperture is coaxially aligned with the bore in the housing to a second position in which the second smaller diameter aperture is coaxially aligned with the bore in the housing;
providing a moveable sleeve in the bore in the housing, responsive to engagement with an inserted endform, for movement from a first position wherein the sleeve engages the first diameter aperture in the retainer to hold the retainer in the first position to the second position upon engagement with an inserted endform to disengage the sleeve from the first aperture in the retainer and allow the biasing the retainer to be automatically biased to the second position.
